# EUROPEAN PATENT APPLICATION

(11) **EP 1 391 593 A1**
(43) Date of publication of application: **25.02.2004**
(21) Application number: 02255768.0
(22) Date of filing: 19.08.2002
(51) Int. Cl.: F01P 3/08

(54) **Fluid filtration system with resiliently expandable filter element**

(71) Applicant: Perkins Engines Company Limited, Peterborough, PE1 5NA (GB)
(72) Inventor: Evans, John R, CW3 9JU Crewe Cheshire (GB); Girt, Nick N, Stafford ST17 4QW Staffordshire (GB)
(74) Representative: Murnane, Graham John

(57) **Abstract**

The invention provides a fluid filtration system, particularly for use in piston cooling jets, including a fluid chamber with a filter element disposed therein. In one embodiment the filter element comprises a tubular filter telescopically attached within a coil spring. In a second embodiment the filter element comprises a coil spring serving as a filter. The filter element is installed within the fluid chamber, so its interior is in communication with one of an inlet and outlet of the chamber, by compressing the filter element and inserting it through an aperture in the fluid chamber which serves as the other of the fluid inlet and outlet. The filter element then expands and is held in place by its resilient bias. The filter element of the invention can be used to apply local filtration, and can be readily removed for cleaning or replacement by reversing the installation process.

## Description

### TECHNICAL FIELD

This invention relates to fluid filtration systems. It is particularly, but not exclusively, applicable to oil filtration systems used within piston cooling jets in reciprocating piston engines.

### BACKGROUND

Piston cooling jets are widely used on reciprocating piston engines, particularly diesel cycle engines, as additional cooling means. They work by spraying oil or other fluid on to the pistons during the operation of the engine.

The jets are generally located within the crankcase housing and direct a jet of oil to the underside of the piston. The jets have nozzles which are of a relatively small diameter internal bore to ensure a precisely located jet of oil. The oil used is generally the lubricating oil contained within the sump of the engine. The oil contained within the sump often contains impurities and particulates. To prevent the jets becoming blocked the oil may be filtered. Over time the filters degrade and become blocked and consequently require replacement or cleaning. Prior art filtration methods rely to a large extent on a central filter within the engine's oil circuit or on providing an additional simple paper filter for the cooling jets.

Known filter elements can be difficult to replace or may not provide adequate filtration if the oil circuit is compromised downstream of a central filter. This can happen, for example, if repairs are undertaken in an environment where the risk of contamination from airborne particles is significant. The present invention seeks to provide a filter element and fluid filtration system which overcomes one or more of the problems of the prior art.

### SUMMARY OF THE INVENTION

The present invention provides a fluid filtration system comprising a fluid chamber, a fluid inlet in communication with said fluid chamber, a fluid outlet in communication with said fluid chamber and a resiliently compressible filter element. The filter element includes a filter and is positionable in the fluid chamber in a first partially compressed state such that the filter is arranged between the fluid inlet and the fluid outlet, the filter element being removable through one of said fluid inlet and fluid outlet when compressed to a second further compressed state.

The present invention also provides a filter element comprising a tubular filter and a resilient member, the filter element being selectively compressible between an at rest expanded state in which the filter element has a first length and a compressed state in which the filter element has a second length smaller than the first length.

Furthermore the present invention provides a method of fitting a filter element between a fluid inlet and a fluid outlet in a fluid chamber of a fluid filtration system, the filter element comprising a tubular filter and a resilient member. The method includes the steps of:
compressing the filter element from an at rest expanded state to a compressed state;
inserting the filter element in the compressed state into the fluid chamber through an aperture in the fluid chamber;
allowing the filter element to expand under biasing action of the resilient member to a partially compressed state in which the filter is arranged between the fluid inlet and the fluid outlet of the fluid chamber.

### BRIEF DESCRIPTION OF THE DRAWINGS

Fig. 1 is a side sectional view of a piston cooling jet utilising a fluid filtration system according to a first embodiment of the present invention;
Fig. 2 is a side sectional view of the piston cooling jet of Fig. 1 showing a filter element being fitted into the piston cooling jet via the access aperture; and
Fig. 3 is a side sectional view of a piston cooling jet utilising a fluid filtration system according to a second embodiment of the present invention.

### DETAILED DESCRIPTION

Referring to the drawings, two embodiments of the present invention will now be described, by way of example only.

In the first embodiment there is provided a piston cooling jet 10.

The piston cooling jet 10 includes a fluid filtration system 12 in the body 14 of the cooling jet. The body 14 is substantially cylindrical and defines therein a fluid chamber 16. The body 14 has a cylindrical side wall 18 and first and second end walls 20,22.

A tapered fluid outlet 24 is located in the first end wall 20. A jet nozzle 26 extends from the fluid outlet 24. The jet nozzle 26 has an internal passageway 28 and terminates in an internally tapered jet nozzle outlet 30.

It will be understood that the shapes of the fluid outlet 24, jet nozzle 26 and jet nozzle outlet 30 may be varied and do not form part of the present invention.

There is a substantially rectangular aperture 32 in the cylindrical side wall 18 of the body 14. The aperture 32 provides access to the interior of the cooling jet body 14 and also defines the fluid inlet 34 of the fluid filtration system 12. A protrusion 36 extends within the fluid chamber 16 from the fluid outlet 24 and jet nozzle 26.

A filter element 38 is housed within the fluid chamber 16. The filter element 38 comprises a tubular filter 40 connected to a resilient member in the form of a coil spring 42. The tubular filter 40 has a circumferential flange 44, to which one end of the coil spring 42 is connected. However other methods of connecting one end of the coil spring 42 to the tubular filter 40 may be used. The end 46 of the tubular filter 40 disposed within the coil spring 42 is closed whereas the opposing end 48 is open.
The tubular filter 40 may be of any suitable filter material, but in the illustrated embodiment is made of perforated metal, the perforations 50 being substantially circular. It is to be understood that the perforations 50 can be of any shape, provided that the dimensions of the perforations are such that particulates having a size greater than the permissible particulate size are prevented from passing through the perforations. It is also to be understood that the metal used may be any suitable for the application, but in this case is steel. Although in this particular embodiment the coil spring 42 attaches to the flange 40 by biasing alone, the coil spring 42 may attach to the tubular filter 40 in any suitable manner and can be spot welded or attached by mechanical fasteners for example.

The filter element 38 is designed so that in its uncompressed state it is longer than the overall internal length of the fluid chamber 16. The filter element 38 therefore biases into contact with the two opposing ends of the fluid chamber 16 and is not permanently fixed within the fluid chamber 16.

Two circumferential grooves 52 are provided on the cylindrical side wall 18. A mounting bracket 53 extends from one end of the piston cooling jet body 14 adjacent to the first end wall 20.

The circumferential grooves 52 receive O-rings (not shown). The cooling jets 10 are fitted into a cylinder block (not shown) of a reciprocating piston engine (not shown) in a manner which is known in the art by means of shafts in the cylinder block (not shown). The shafts extend perpendicular to the cylinders of the cylinder block. The piston cooling jets 10 are positioned in the shafts with the jet nozzles 26 directed toward the cylinders, one cooling jet 10 per shaft/cylinder. The piston cooling jets 10 are attached to the cylinder block by a bolt (not shown) which engages the mounting bracket 53. The mounting bracket 53 aids in positioning the jet nozzle 26, so the jet of coolant oil is directed at a desired location onto the underside of the reciprocating piston (not shown).

The piston cooling jets 10 are fed with coolant oil by a supply cavity (not shown), bored through the cylinder block perpendicular to the shafts (not shown). The supply cavity and individual shafts are in fluid communication. The O-rings (not shown) ensure a seal to impede oil escaping from a circuit defined by the shafts, cavity and cooling jets 10.

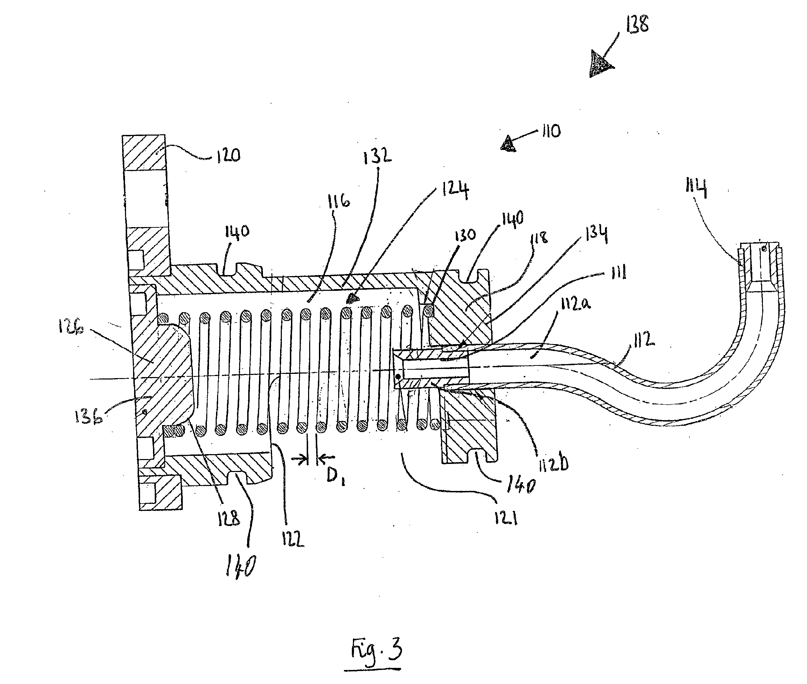

Referring now to Fig. 3 a second embodiment of the invention is shown. In the second embodiment there is also provided a piston cooling jet referred to as 10. It will be understood that identical elements have identical reference numbers to the first embodiment unless indicated below.

In the second embodiment a coil spring 54 serves both as a filter element and a resilient member. Additionally there is also provided a seating 56 for the coil spring. The seating is located on the second end wall 22 of the 18. The seating 56 is a circular projection which reduces in diameter by way of a chamfer 58 to assist in location of the coil spring 54 on the seating 56. On the internal side of the first end wall 20 there is provided a locating notch 60 for locating the coil spring 54.

### INDUSTRIAL APPLICABILITY

One or more of the cooling jets 10 are provided within an internal combustion engine (not shown), generally one per cylinder. A supply of coolant oil is provided to the piston cooling jet 10 by the supply cavity (not shown) detailed above, the oil entering the fluid chamber 16 via the fluid inlet 34.

As described above, the coolant oil will generally be taken directly from the engine sump and can therefore be contaminated by impurities and particulates. As the fluid passes through the filter element 38,54 the contaminants are reduced.

The filter element 38,54 requires periodic replacement or cleaning to maintain the efficiency of the system.

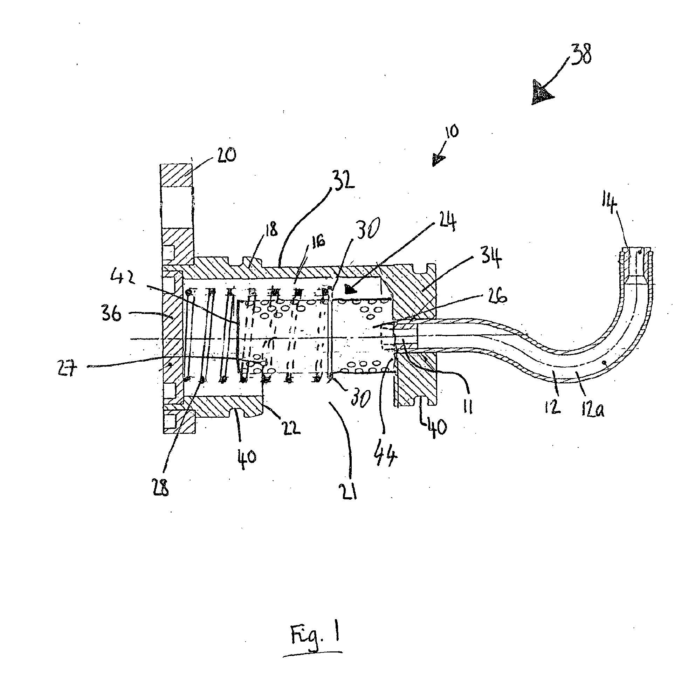

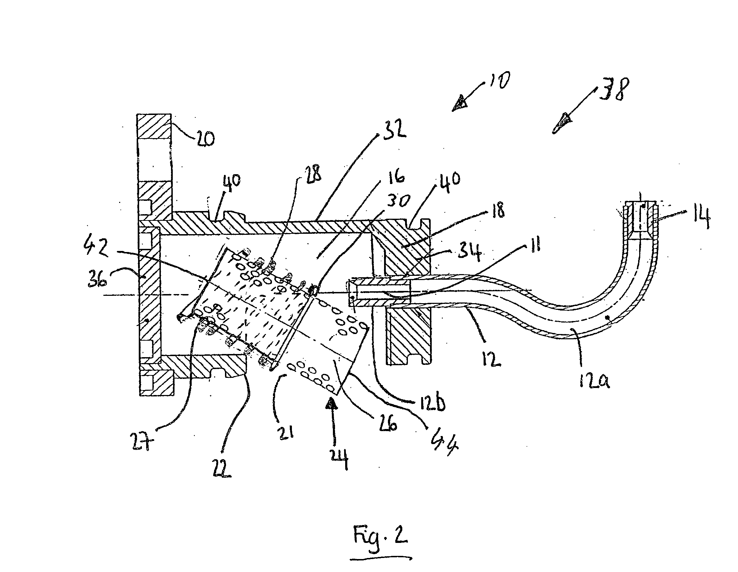

Referring to the first embodiment illustrated in Figs. 1 and 2, when the filter element 38 requires replacement or cleaning, the filter element 38 can be manipulated through the aperture 32 in the cylindrical side wall 18 of the body 14. Once the end of the filter element 38 which biases into contact with the end of the fluid chamber 16 from which the jet nozzle 26 extends clears the jet nozzle protrusion 36, it is a relatively simple task for the filter element 38 to be removed from the interior of the fluid chamber 16. The replacement or cleaned filter element 38 can then be physically compressed to a fully compressed state so its overall length is less than the overall length of the aperture 32. It can then be fed into the fluid chamber 16 and once released will extend to a partially compressed state. In this state the coil spring 42 acts on the flange 44 to bias the open end 48 of the tubular filter 40 against the first end wall 20. The filter element 38 is thus in contact with the two opposing ends of the fluid chamber 16. This removal/insertion process is illustrated in Fig. 2.

The process is largely similar in the second embodiment, illustrated in Fig. 3. The coil spring 54 can be manipulated through the aperture 32 and removed when required. When a replacement or cleaned coil spring 54 is to be fitted into the fluid chamber 16, it is firstly compressed to a fully compressed state, the coil spring 54 in this compressed state being sufficiently reduced in length to fit through the aperture 32. The compressed coil spring 54 is then fed through the aperture 32 and allowed to expand. When correctly fitted, the coil spring 54 should bias against the two opposing ends of the fluid chamber 16 in a partially compressed state.
The seating 56 will locate the first end of the coil spring 54 while the second end will locate into the notch 60.

Adjacent coils of the coil spring 54 act as the filter when the coil spring is in place.
Particulates and contaminants which are larger than the distance D₁ between adjacent coils, will be prevented from passing through the coil spring and towards the jet nozzle 26. The distance D₁ between adjacent coils in this particular embodiment is less than or equal to the diameter of the jet nozzle passageway 28. Thus any particulates or contaminants that are able to pass through the coil spring 54 will be smaller than the diameter of the jet nozzle passageway 28.

The present invention therefore provides an improved fluid filtration system whose filter element can be easily replaced leading to significant time and cost savings in present applications. It is to be understood that even though the embodiments described herein relate particularly to piston cooling jet applications for internal combustion engines, the present invention could be applied to any appropriate fluid filtration system, such as for example water filtration or air filtration.

The fluid flow may also be reversed, the fluid inlet being within the tubular filter and the fluid flowing across the filter radially outward.

The filter element may also be planar in form and could bias across a central fluid chamber between a fluid inlet and a fluid outlet.

The aperture 22 may also be shaped or located differently and is not limited to a generally rectangular aperture.

It is also to be understood that the invention is not limited to the embodiments hereinbefore described but may be modified in both construction and detail.

## Claims

1. A fluid filtration system comprising a fluid chamber, a fluid inlet in communication with said fluid chamber, a fluid outlet in communication with said fluid chamber and a resiliently compressible filter element, said filter element including a filter and being positionable in the fluid chamber in a first partially compressed state such that the filter is arranged between the fluid inlet and the fluid outlet, the filter element being removable through one of said fluid inlet and fluid outlet when compressed to a second further compressed state.

2. A fluid filtration system according to Claim 1 wherein the filter is a tubular filter.

3. A fluid filtration system according to Claim 1 or 2, wherein the filter element includes a resilient member adapted to bias the filter into contact with at least one contact surface within the fluid chamber.

4. A fluid filtration system according to Claim 3 wherein the resilient member is a coil spring.

5. A fluid filtration system according to Claim 4 wherein the filter comprises a coil spring, adjacent coils of the coil spring being spaced sufficiently close to each other to serve as a filter medium.

6. A fluid filtration system according to any of Claims 1 to 4 wherein the filter is a perforated tube.

7. A fluid filtration system according to Claim 4 wherein the filter is a tubular filter provided with a circumferential flange and wherein the coil spring surrounds a portion of the tubular filter and bears against the flange in the first partially compressed state.

8. A piston cooling jet for an internal combustion engine including a fluid filtration system according to any preceding claim and a jet nozzle in fluid communication with said fluid outlet, said filter element being removable through said fluid inlet

9. An internal combustion engine including at least one piston cooling jet according to Claim 8.

10. A filter element comprising a tubular filter and a resilient member, the filter element being selectively compressible between an at rest expanded state in which the filter element has a first length and a compressed state in which the filter element has a second length smaller than the first length.

11. A filter element according to Claim 10 wherein the resilient member is a coil spring.

12. A filter element according to Claims 10 or 11 wherein the filter is a perforated tube.

13. A filter element according to Claim 10 wherein the tubular filter is provided with a circular flange and wherein the coil spring surrounds a portion of the tubular filter and bears against the flange in the compressed state.

14. A fluid filtration system including a filter element according to any of Claims 10 to 13.

15. A method of fitting a resiliently expandable filter element between a fluid inlet and a fluid outlet in a fluid chamber of a fluid filtration system, the filter element comprising a tubular filter and a resilient member, comprising the steps of,
compressing the filter element from an at rest expanded state to a compressed state,
inserting the filter element in the compressed state into the fluid chamber through one of said fluid inlet and fluid outlet,
allowing the filter element to expand under biasing action of the resilient member to a partially compressed state in which the filter is arranged between the fluid inlet and the fluid outlet of the fluid chamber.

16. A method of filling a resiliently expandable fluid inlet and a fluid outlet in a fluid chamber of a fluid filtration system according to Claim 15 wherein the resiliently expandable filter element comprises a tubular filter and a resilient member.

17. A method of filling a resiliently expandable fluid inlet and a fluid outlet in a fluid chamber of a fluid filtration system according to Claim 15 wherein the resiliently expandable filter element is a coil spring.

## Amended claims

### Amended claims in accordance with Rule 86(2) EPC.

**1.** A fluid filtration system comprising a fluid chamber, a fluid inlet in communication with said fluid chamber, a fluid outlet in communication with said fluid chamber and a resiliently compressible filter element, said filter element including a filter and being positionable in the fluid chamber in a first partially compressed state such that the filter is arranged between the fluid inlet and the fluid outlet, the filter element being removable from said fluid chamber through an aperture when compressed to a second further compressed state.

**2.** (see letter)

**3.** A fluid filtration system according to claims 1 or 2 wherein the filter is a tubular filter.

**4.** A fluid filtration system according to any preceding claim, wherein the filter element includes a resilient member adapted to bias the filter into contact with at least one contact surface within the fluid chamber.

**5.** A fluid filtration system according to Claim 4 wherein the resilient member is a coil spring.

**6.** A fluid filtration system according to Claim 5 wherein the filter comprises a coil spring, adjacent coils of the coil spring being spaced sufficiently close to each other to serve as a filter medium.

**7.** A fluid filtration system according to any of Claims 1 to 5 wherein the filter is a perforated tube.

**8.** A fluid filtration system according to Claim 5 wherein the filter is a tubular filter provided with a circumferential flange and wherein the coil spring surrounds a portion of the tubular filter and bears against the flange in the first partially compressed state.

**9.** A piston cooling jet for an internal combustion engine including a fluid filtration system according to any preceding claim and a jet nozzle in fluid communication with said fluid outlet, said filter element being removable through said fluid inlet

**10.** An internal combustion engine including at least one piston cooling jet according to Claim 9.

**11.** A filter element comprising a tubular filter and a resilient member, the filter element being selectively compressible between an at rest expanded state in which the filter element has a first length and a compressed state in which the filter element has a second length smaller than the first length.

**12.** A filter element according to Claim 11 wherein the resilient member is a coil spring.

**13.** A filter element according to Claims 11 or 12 wherein the filter is a perforated tube.

**14.** A filter element according to Claim 11 wherein the tubular filter is provided with a circular flange and wherein the coil spring surrounds a portion of the tubular filter and bears against the flange in the compressed state.

**15.** A fluid filtration system including a filter element according to any of Claims 11 to 14.

**16.** A method of fitting a resiliently expandable filter element between a fluid inlet and a fluid outlet in a fluid chamber of a fluid filtration system, the filter element including a resilient member, comprising the steps of,
compressing the filter element from an at rest expanded state to a compressed state,
inserting the filter element in the compressed state into the fluid chamber through one of said fluid inlet and fluid outlet,
allowing the filter element to expand under biasing action of the resilient member to a partially compressed state in which the filter is arranged between the fluid inlet and the fluid outlet of the fluid chamber.

**17.** A method of fitting a resiliently expandable fiter element between a fluid inlet and a fluid outlet in a fluid chamber of a fluid filtration system according to claim 16 wherein the filter element in the compressed state is inserted into the fluid chamber through one of said fluid inlet and fluid outlet.

**18.** A method of fitting a resiliently expandable filter element between a fluid inlet and a fluid outlet in a fluid chamber of a fluid filtration system according to Claim 16 or 17 wherein the resiliently expandable filter element comprises a tubular filter and a resilient member.

**19.** A method of fitting a resiliently expandable filter element between a fluid inlet and a fluid outlet in a fluid chamber of a fluid filtration system according to Claims 16 or 17 wherein the resiliently expandable filter element is a coil spring.
